# EUROPÄISCHE PATENTSCHRIFT

(11) **EP 2 141 055 B1**
(45) Veröffentlichungstag und Bekanntmachung des Hinweises auf die Patenterteilung: **12.06.2013**
(21) Anmeldenummer: 09008441.9
(22) Anmeldetag: 29.06.2009
(51) Int. Cl.: B60T 17/00, B60T 17/04

(54) **Sicherheitsventil für eine pneumatische Getriebesteuerung**
Safety valve for a pneumatic gearbox control
Soupape de sécurité pour une commande d'engrenage pneumatique

(30) Priorität: 02.07.2008 DE 102008031328
(43) Veröffentlichungstag der Anmeldung: 06.01.2010
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A2- 1 495 934
- WO-A1-01/12488
- WO-A2-2004/103509

## Beschreibung

Die Erfindung betrifft ein Sicherheitsventil mit einem Drucklufteingang, einem Druckluftausgang und einem im Inneren des Sicherheitsventils angeordneten Filtereinsatz. Eine gattungsgemäße Anordnung ist in WO01/12488A1 beschrieben.

Nutzfahrzeuge mit pneumatischen Komponenten benötigen eine Druckluftversorgungsanlage. Die Druckluft wird im Allgemeinen von einem Kompressor in eine Luftaufbereitungsanlage gefördert, wo die eingebrachte Luft in einem Lufttrockner mit angeschlossener Luftfilterpatrone gereinigt wird, um dann über ein Mehrkreisschutzventil ihrer Verwendung zugeführt zu werden, beispielsweise dem Bremssystem oder einer pneumatischen Getriebesteuerung des Nutzfahrzeugs.

Die Luftfilterpatrone umfasst üblicherweise einen oft als Koaleszenzfilter ausgeführten Vorfilter zur Entfernung von Schmutz und Ölpartikeln sowie ein Trockenmittel, um der Druckluft die Feuchtigkeit zu entziehen. Insgesamt ermöglicht die Luftfilterpatrone das Bereitstellen von aufbereiteter Druckluft von definierter gleich bleibender Qualität. Die Qualität der aufbereiteten Druckluft ist dabei insbesondere für die Lebensdauer der mit Druckluft versorgten Komponenten des Nutzfahrzeugs wichtig. Schlechte Druckluftqualität kann vorzeitigen mechanischen Verschleiß und erhöhte Korrosion durch feste Partikel oder Ölpartikel und Feuchtigkeit verursachen. Hersteller von besonders empfindlichen Nutzfahrzeugkomponenten, zum Beispiel einer pneumatischen Getriebesteuerung, schreiben deshalb eine Mindestqualität hinsichtlich der zugeführten Druckluft vor, wobei die vorgeschriebene Druckluftqualität deutlich höher als die mit bisherigen Filterpatronen erreichbare Qualität liegen kann.

Es ist im Stand der Technik bekannt, einen weiteren Filter in einen Anschlussstutzen der pneumatischen Getriebesteuerung einzubauen, um weitere Festpartikel im normaloptisch sichtbaren Bereich herauszufiltern und die Druckluftqualität weiter zu verbessern. Ist der verwendete Filter am Ende seiner Lebensdauer angelangt, stark verschmutzt und wirkt als Drossel in dem Anschlussstutzen, so kann die pneumatische Getriebesteuerung aufgrund des erhöhten Staudruckes nicht mehr ausreichend mit Druckluft versorgt werden. Die Funktionsfähigkeit der pneumatischen Getriebesteuerung ist daher gestört, weshalb das Nutzfahrzeug mit einem Defekt ausfällt, da das Wechseln bzw. das Einlegen eines Ganges nicht mehr möglich ist.

Der Erfindung liegt die Aufgabe zugrunde, die Funktionsfähigkeit der pneumatischen Getriebesteuerung auch bei einem verstopften Siebdruckfilter sicherzustellen, wobei insbesondere auf aufwändige elektronische Schaltungen verzichtet werden soll.

Diese Aufgabe wird mit den Merkmalen des unabhängigen Anspruches gelöst.

Vorteilhafte Ausführungsformen ergeben sich aus den abhängigen Ansprüchen.

Das gattungsgemäße Sicherheitsventil wird dadurch weiterentwickelt, dass der Filtereinsatz abhängig von einem anliegenden Staudruck in dem Sicherheitsventil zwei axial verschiedene Endpositionen einnehmen kann und in einer der beiden Endpositionen einen Bypass freigibt, über den die Druckluft unter Umgehung des Filtereinsatzes vom Drucklufteingang zum Druckluftausgang gelangt. Durch das Freigeben eines Bypasses in einer der beiden Endpositionen wird eine Versorgung des dem Sicherheitsventil nachgeordneten Verbrauchers auch bei einem verstopftem Filtereinsatz ermöglicht.

Besonders bevorzugt ist vorgesehen, dass der Filtereinsatz an seiner Eingangsöffnung eine Schräge aufweist. Die Normale der Schräge an der Eingangsöffnung des Filtereinsatzes weicht um einige Grad von der Strömungsrichtung der in den Filtereinsatz einströmenden Druckluft ab. Ein sich an der Eingangsöffnung bildender Filterkuchen abgeschiedener Schutzpartikel wird sich daher asymmetrisch ausbilden, wobei die Dicke des Filterkuchens am niedrigsten Punkt der Schräge am größten ist. Die Asymmetrie des Filterkuchens kann ausgenutzt werden, um diesem eine höhere Stabilität an der dem Druckluftausgang zugewandten Seite des Filtereinsatzes zu verleihen und eine Einbringung von bereits abgeschieden Schmutzpartikeln, die sich bei dem Freigeben des Bypasses aus dem Filterkuchen lösen könnten, in die pneumatische Getriebesteuerung zu verhindern.

Weiterhin kann vorgesehen sein, dass der mit zunehmendem Öffnungshub des Sicherheitsventils freigegebene Strömungsquerschnitt am Ventilsitz zunimmt, wodurch der Staudruck bei zunehmendem Volumenstrom konstant gehalten wird. Dies kann beispielsweise durch ein sich zur Schließposition hin konisch verjüngendes System aus Ventilsitz und Filtereinsatz erreicht werden. Bei zunehmendem Ventilhub vergrößert sich der freigegebene Strömungsquerschnitt.

Insbesondere kann vorgesehen sein, dass sich die Wirkfläche des Sicherheitsventils bei zunehmendem Volumenstrom vergrößert, um den Staudruck konstant zu halten. Die Wirkfläche, das heißt die Projektion der Fläche des beweglichen Teils des Sicherheitsventils an der der Staudruck angreift in die Ebene senkrecht zur Hubbewegung, kann variabel ausgeführt sein. Beispielweise kann die verwendete Dichtung als eine flexible Dichtlippe ausgeführt sein, die sich unter dem herrschenden Staudruck verformt und dabei eine Vergrößerung der Wirkfläche bewirkt. Durch die vergrößerte Wirkfläche können sich wiederum der Hub des Sicherheitsventils und/oder der freigegebene Strömungsquerschnitt vergrößern.

Vorteilhafterweise ist dabei vorgesehen, dass das Sicherheitsventil einen Doppelventilsitz umfasst, um eine Vergrößerung der Wirkfläche zu ermöglichen. Durch einen Doppelventilsitz, können zwei unterschiedlich große Wirkflächen in Abhängigkeit von dem anliegenden Staudruck bereitgestellt werden. Auf diese Weise kann wiederum der Staudruck konstant gehalten werden.

Nützlicherweise kann vorgesehen sein, dass an dem Filtereinsatz eine Führungsnase angeordnet ist. Das Vorsehen einer Führungsnase an den Filtereinsatz ermöglicht die exakte Ausrichtung der Schräge gegenüber dem Druckluftausgang.

Alternativ kann vorgesehen sein, dass an einem Sicherheitsventilgehäuse eine Führungsnase angeordnet ist. Auch durch das Vorsehen einer Führungsnase an dem Sicherheitsventilgehäuse ist eine exakte Ausrichtung der Schräge gegenüber dem Druckluftausgang möglich.

Eine Verbesserung entsteht auch dadurch, dass ein elastisches Element vorgesehen ist, über das der Filtereinsatz in dem Sicherheitsventilgehäuse in einer Richtung entgegen einer definierten von dem elastischen Element aufgebrachten Kraft beweglich fixiert ist. Die Verwendung eins elastischen Elementes, zum Beispiel einer Feder, die den Filtereinsatz axial in einer der beiden Endpositionen fixiert, ermöglicht das automatische Wechseln der Endposition in Abhängigkeit von dem an dem Filterelement anstehenden Staudruck ohne eine aufwendige Sensorik beziehungsweise Mechanik. Übersteigt der an dem Filtereinsatz anliegende Staudruck die von der Feder aufgebrachte Fixierungskraft, zum Beispiel durch Verstopfen des Filters, so schaltet das Sicherheitsventil durch die Bewegung des Filtereinsatzes entgegen der Federkraft in seine andere Endposition. Dabei wird durch die Bewegung des Filtereinsatzes gerade der Bypass freigegeben, über den Druckluft unter Umgehung des Filtereinsatzes vom Drucklufteingang zum Druckluftausgang strömen kann.

Nützlicherweise ist vorgesehen, dass der Filtereinsatz hinter einer verschließbaren Abdeckung in einem Sicherheitsventilgehäuse montierbar ist. Die Montage des Filtereinsatzes hinter einer verschließbaren Abdeckung erlaubt den einfachen Austausch verstopfter Filtereinsätze.

In diesem Zusammenhang ist es besonders vorteilhaft, dass die von dem elastischen Element aufgebrachte Kraft, die den Filtereinsatz fixiert, über die Abdeckung einstellbar ist. Besitzt die Abdeckung zum Beispiel ein Gewinde, über welches die Vorspannung des elastischen Elements justierbar ist, so können unterschiedliche Betriebspunkte des Sicherheitsventils je nach den Bedürfnissen der nachgeordneten Verbraucher eingestellt werden.

Es kann vorgesehen sein, dass die Druckluft den Filtereinsatz radial von Innen nach Außen durchströmt. Die Verwendung eines Filtereinsatzes der radial von innen nach außen von der Druckluft durchströmt wird, erlaubt insgesamt eine einfache Ausgestaltung des Sicherheitsventils, da beispielsweise der Druckluftausgang radial nach außen abzweigen kann. Dies bietet auch Vorteile bezüglich der Sicherheit angeschlossener Verbraucher vor dem Eintragen von Filterkuchenbruchstücken bei geöffnetem Bypass.

Besonders bevorzugt ist die Verwendung eines vorstehend beschriebenen Sicherheitsventils im Rahmen einer pneumatischen Getriebesteuerung für ein Nutzfahrzeug, wobei das Sicherheitsventil die Druckluft weiter aufbereitet und die pneumatische Getriebesteuerung somit vor einem vorzeitigen Defekt schützt.

Bei diesem System ist es besonders nützlich, dass ein Sensor zur Bestimmung des Betriebszustands des Sicherheitsventils vorgesehen ist. Ein Sensor, der beispielsweise als einfacher, die Position des Filtereinsatzes detektierender Kontakt ausgeführt sein kann, ermöglicht die Ausgabe einer Warnung, dass der Filtereinsatz des Sicherheitsventils verstopft ist und ausgetauscht werden muss.

Die Erfindung wird nun mit Bezug auf die begleitenden Zeichnungen anhand einer besonders bevorzugten Ausführungsform beispielhaft erläutert.

Es zeigen:
- Figur 1: einen Längsschnitt durch ein erfindungsgemäßes Sicherheitsventil in einer ersten Endposition;
- Figur 2: den oberen Teil eines Längsschnitts durch ein erfindungsgemäßes Sicherheitsventil in einer zweiten Endposition;
- Figur 3: einen erfindungsgemäßen Filtereinsatz;
- Figur 4: eine schematisch vereinfachte Darstellung zur Erläuterung der Filterwirkung des Filtermaterials;
- Figur 5: ein Nutzfahrzeug mit pneumatischer Getriebesteuerung und einem erfindungsgemäßen Sicherheitsventil;
- Figur 6: die zeitliche Ansteuerung eines Ventils der pneumatischen Getriebesteuerung;
- Figur 7: eine seitliche Schnittansicht eines als Flachsitzventil ausgeführten Doppelsitzventils und
- Figur 8: eine Draufsicht auf Wirkflächen eines Doppelsitzventils.

In den folgenden Zeichnungen bezeichnen gleiche Bezugszeichen gleiche oder gleichartige Teile.

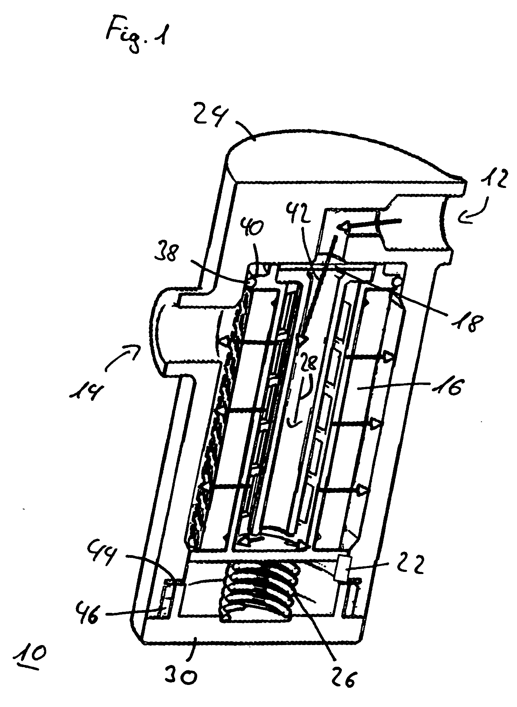

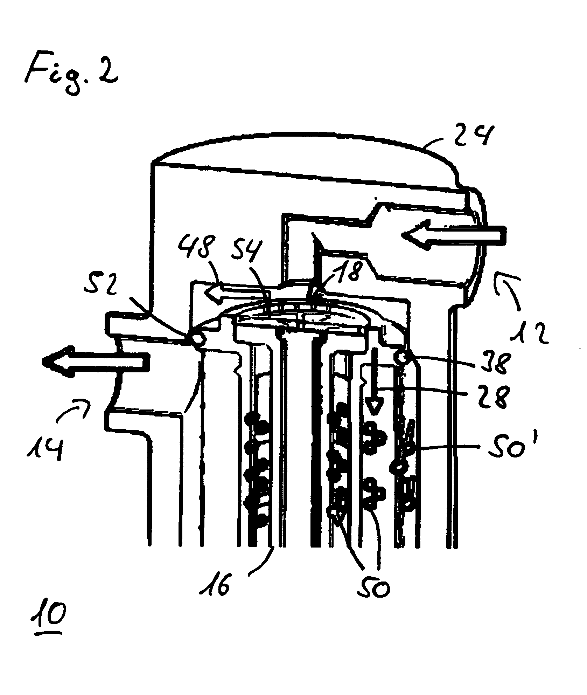

Figur 1 zeigt einen Längsschnitt durch ein erfindungsgemäßes Sicherheitsventil in einer ersten Endposition. Das dargestellte Sicherheitsventil 10 ist aus einem Sicherheitsventilgehäuse 24 mit einem Drucklufteingang 12 und einen Druckluftausgang 14 aufgebaut. Im Inneren des Sicherheitsventilsgehäuses 24 ist weiterhin ein Filtereinsatz 16 mit einer Eingangsöffnung 18, einer Führungsnase 22 und einer Führungsrippe 40 angeordnet. Das Sicherheitsventil 10 mit dem Filtereinsatz 16 kann alternativ auch als Filterelement mit einem Sicherheitsventil als Bypass betrachtet werden, da es dieselben Funktionen umfasst. Der Filtereinsatz 16 wird von einem elastischen Element 26, das als einfache Feder ausgeführt dargestellt ist, in einer axialen Richtung 28 fixiert. Das elastische Element 26 stützt sich dabei auf eine Abdeckung 30, die über ein Gewinde 46 und eine Dichtung 44 mit dem Sicherheitsventilgehäuse 24 verschraubt ist. Die Vorspannung des elastischen Elements 26 ist daher über das Gewinde 46 bei der Montage der Abdeckung 30 einstellbar. Zwischen dem Sicherheitsventilgehäuse 24 und der Führungsrippe 40 ist ein Dichtring 38 vorgesehen, der die durch den Drucklufteingang 12 in das Sicherheitsventilgehäuse 24 einströmende Druckluft auf einen Strömungsweg 42, der durch Pfeile angedeutet ist, durch den Filtereinsatz 16 zwingt. Die an dem Filtereinsatz 16 angeordnete Führungsnase 22 ruht in einer in dieser Darstellung nicht sichtbaren Führungsnut, die an dem Sicherheitsventilgehäuse 24 angeordnet ist. Durch die Kombination einer Führungsnase 22 mit einer Führungsnut ist der Filtereinsatz 16 in der Ebene senkrecht zu der Richtung 28 exakt ausrichtbar. Auf diese Weise kann eine Schräge an der Eingangsöffnung 18 des Filtereinsatzes 16 von dem Druckluftausgang 14 fortgeneigt orientiert fixiert werden. Die Schräge des Filtereinsatzes 16 ist verhältnismäßig klein und in der Figur 1 nicht mehr sichtbar. Die dem Druckluftausgang 14 zugewandte Seite des Filtereinsatzes 16 ist jedoch in axialer Richtung 28 länger als die dem Druckluftausgang 14 abgewandte Seite des Filtereinsatzes 16. In der dargestellten Endposition des Sicherheitsventils 10 ist kein Bypass für die einströmende Druckluft geöffnet. Mit zunehmender Verstopfung des Filtereinsatzes 16 erhöht sicher jedoch der Staudruck an dem Filtereinsatz 16 und in Folge dessen bewegt sich der Filtereinsatz 16 in Richtung 28 in die in Figur 2 dargestellte Endposition.

Figur 2 zeigt den oberen Teil eines Längsschnitts durch ein erfindungsgemäßes Sicherheitsventil in einer zweiten Endposition. Figur 2 zeigt also das bereits in Figur 1 beschriebene Sicherheitsventil 10, wobei sich der Filtereinsatz 16 nunmehr in seiner zweiten Endposition befindet. Die durch den Drucklufteingang 12 einströmende Druckluft kann in dieser Endposition des Filterelements 16 über einen mit Pfeilen angedeuteten Bypassströmungsweg 48 direkt zu dem Druckluftausgang 14 strömen. Dies ist dadurch realisierbar, dass die Dichtung 38 von einem Ventilsitz 52 des als Überdruckventil wirkenden Filtereinsatzes 16 abhebt. Die Bewegung des Filtereinsatzes 16 wird dabei durch einen erhöhten Staudruck an dem Filterelement 16 induziert, der von Ablagerungen 50, 50', beispielsweise an einem Siebfilter 54 beziehungsweise im Inneren des Filtereinsatzes 16, verursacht wird. Auf dem Siebfilter 54 kann sich beispielsweise ein Filterkuchen absetzen, der die Eingangsöffnung 18 des Filtereinsatzes 16 zumindest teilweise verschließt und somit den Staudruck erhöht. Bei der Bewegung des Filtereinsatzes 16 in die dargestellte Endposition kann der auf dem Siebfilter 54 abgelagerte Filterkuchen teilweise zerbrechen und in Form der weiteren Ablagerungen 50' aufgrund der Orientierung der Schräge des Filtereinsatzes 16 auf der dem Druckluftausgang 14 abgewandten Seite des Sicherheitsventils 10 nach unten sinken.

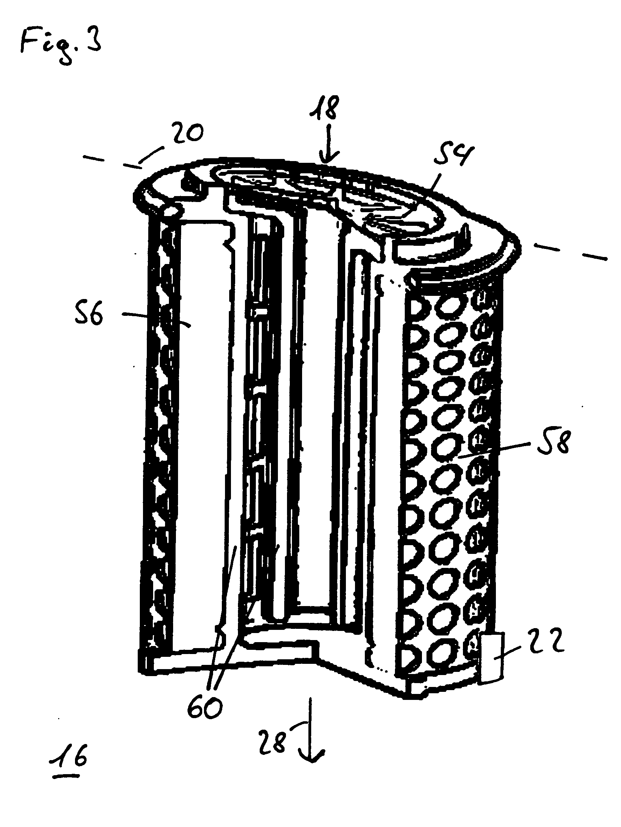

Figur 3 zeigt einen erfindungsgemäßen Filtereinsatz. Der dargestellte Filtereinsatz 16 der in der Richtung 28 axial beweglich in dem Sicherheitsventil angeordnet wird umfasst ein Halteelement 60, auf das ein Filtermaterial 56 in axialer Richtung aufgebracht ist, welches von einer Stützmanschette 58 in radialer Richtung an dem Halteelement 60 fixiert wird. im Bereich der Eingangsöffnung 18 des Filtereinsatzes 16 ist ein Siebfilter 54 angeordnet, wobei die Orientierung des Siebfilters beziehungsweise der Eingangsöffnung, das heißt die zugehörige Normale, bezüglich der Ebene senkrecht zur Richtung 28 eine Schräge 20 aufweist. Weiterhin ist die Führungsnase 22 sichtbar, die die Orientierung der Schräge 20 bezüglich des Druckluftausgangs des Sicherheitsventils festlegt.

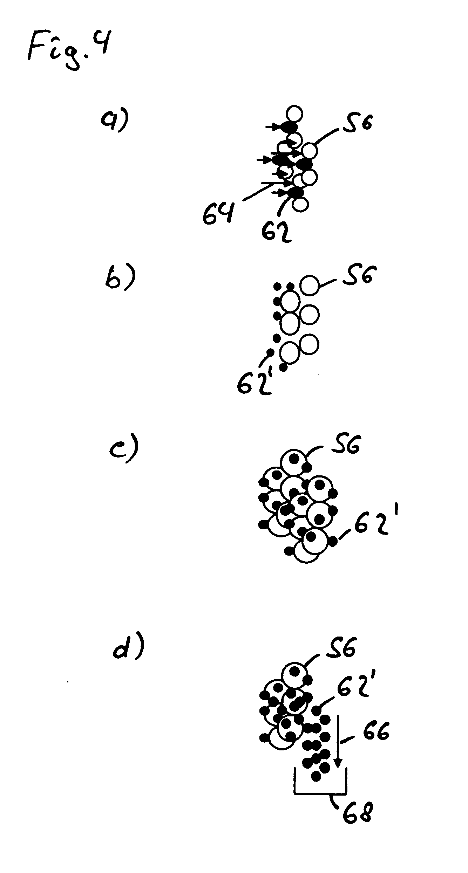

Figur 4 zeigt eine schematisch vereinfachte Darstellung zur Erläuterung der Filterwirkung des Filtermaterials. Figur 4a) zeigt eine erste Filterphase bei der in einer Anströmrichtung 64 auf Filtermaterial 56 auftreffende Schmutzpartikel 62 aufgrund ihrer geometrischen Abmessungen nicht durch das Filtermaterial 56 hindurchtreten können. Mit wachsender Anzahl ausgesiebter Schmutzpartikel 62 wächst daher der an dem Filtermaterial 56 anstehende Staudruck an. Figur 4b) zeigt das Auftreffen kleinerer Schmutzpartikel 62' auf das Filtermaterial 56. Aufgrund der Adhäsionskräfte zwischen den kleineren Schmutzpartikeln 62' beziehungsweise zwischen den kleineren Schmutzpartikeln 62' und dem Filtermaterial 56 lagern sich die kleineren Schmutzpartikel auf der Oberfläche des Filtermaterials 56 an, wobei sie durch den ursprünglichen Bewegungsimpuls der kleineren Schmutzpartikel 62' zugleich verdichtet werden. Figur 4c) zeigt eine fortgeschrittene Filterphase, bei der die kleineren Schmutzpartikel 62' bereits tief in das Filtermaterial 56 hineindifundiert sind. Die Diffusion wird durch Konzentrationsunterschiede der Schmutzpartikel 62' auf dem Filtermaterial 56 angetrieben. Figur 4d) zeigt eine letzte Filterphase, bei der das Filtermaterial 56 bereits gesättigt ist und die akkumulierten kleineren Schmutzpartikel 62' schließlich am Rande des Filtermaterials 56 abfallen und von der Schwerkraft 66 getrieben in einen Auffangbehälter 68 fallen. Dies ist insbesondere dann sinnvoll, wenn die in den vorhergehenden Figuren eingezeichnete Richtung 28 identisch mit der Richtung 66 der Schwerkraft ist.

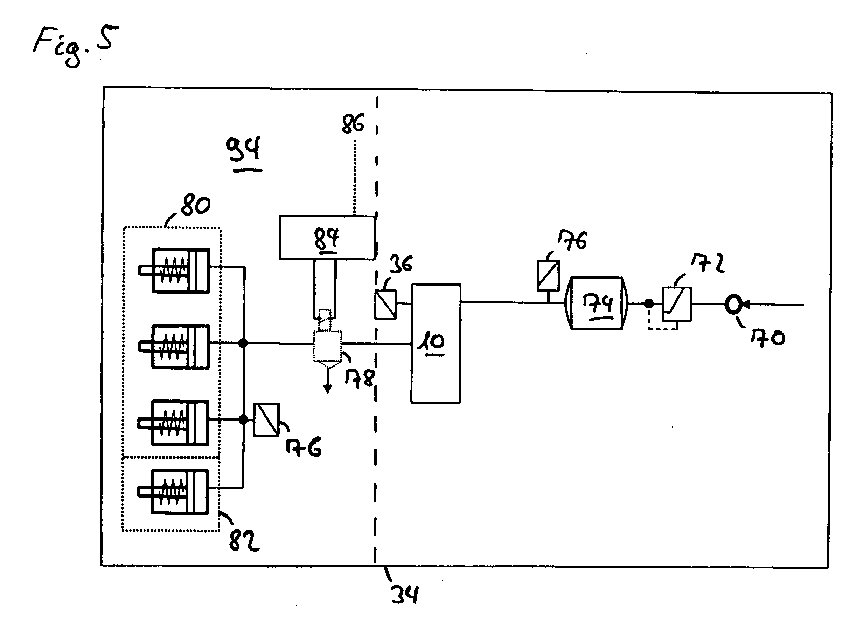

Figur 5 zeigt ein Nutzfahrzeug mit pneumatischer Getriebesteuerung und einem erfindungsgemäßen Sicherheitsventil. Das in Figur 5 dargestellte Nutzfahrzeug 34 umfasst eine pneumatisches Getriebesteuerung 94 mit Schaltaktuatoren 80, einem Kupplungsaktuator 82, einem Steuergerät 84 mit einem Anschluss 86 an einen CAN-Bus und ein weiteres Ventil 78 mit integrierter Entlüftung. Die pneumatische Getriebesteuerung 94 wird über eine Druckversorgung 70 mit Druckluft über ein Ventil 72 versorgt. In der Druckluftversorgungsleitung ist weiterhin ein Behälter 74 mit nachgeordnetem Drucksensor 76 angeordnet, wobei zwischen dem Behälter 74 und der pneumatischen Getriebesteuerung 94 das erfindungsgemäße Sicherheitsventil 10 mit einem Sensor 36 vorgesehen ist. Das Druckniveau der verschiedenen Aktuatoren 80, 82 der pneumatischen Getriebesteuerung 94 ist über Drucksensoren überwachbar, die hier symbolisch durch einen einzelnen Drucksensor 76 dargestellt sind. Weiterhin ist die Verrohrung der Aktuatoren 80, 82 vereinfacht dargestellt, da beispielsweise Steuerventile zum einzelnen Ansteuern der Aktuatoren 80, 82 vorzusehen wären. Der Sensor 36 ist geeignet, den Betriebszustand des Sicherheitsventils 10 zu detektieren und kann diesen beispielsweise an das Steuergerät 84 übertragen. Das Steuergerät 84 kann über den CAN-Bus 86 eine Fehlermeldung ausgeben, aufgrund dessen das Sicherheitsventil 10 beziehungsweise der Filtereinsatz des Sicherheitsventils 10 ausgetauscht wird. Auch wenn die Funktion des erfindungsgemäßen Sicherheitsventils 10 nur im Zusammenhang mit einer pneumatischen Getriebesteuerung 94 dargestellt ist, kann es in einfacher Weise überall dort eingesetzt werden, wo ein Filterelement mit Bypassfunktionalität in Form eines Sicherheitsventils 10 erforderlich ist, um die Luftversorgung angeschlossener Verbraucher sicherzustellen.

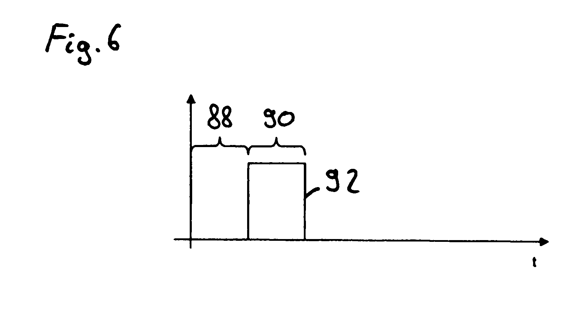

Figur 6 zeigt die zeitliche Ansteuerung eines Ventils der pneumatischen Getriebesteuerung. Aufgetragen ist eine zeitliche Betätigungskurve 92, wobei die Betätigungskurve 92 ein Rechteckprofil beschreibt. Für einen Zeitraum Δt₁ 88 wird das Ventil zunächst nicht betätigt, um anschließend für einen Zeitraum Δt₂ 90 betätigt zu werden. Der Zeitraum Δt₁ 88 beträgt ca. 1,5 Sekunden und der Zeitraum Δt₂ 90 beträgt ca. 0,7 bis 1,2 Sekunden. Während dieser Zeiträume muss eine ausreichende Menge Steuerluft über das Sicherheitsventil an die pneumatische Getriebesteuerung geliefert werden, beziehungsweise über die Entlüftung der pneumatischen Getriebesteuerung eine ausreichende Luftmenge abgelassen werden. Ist dies nicht möglich, so schaltet die pneumatische Getriebesteuerung nicht beziehungsweise nicht sauber und die Lebensdauer der pneumatischen Getriebesteuerung wird reduziert.

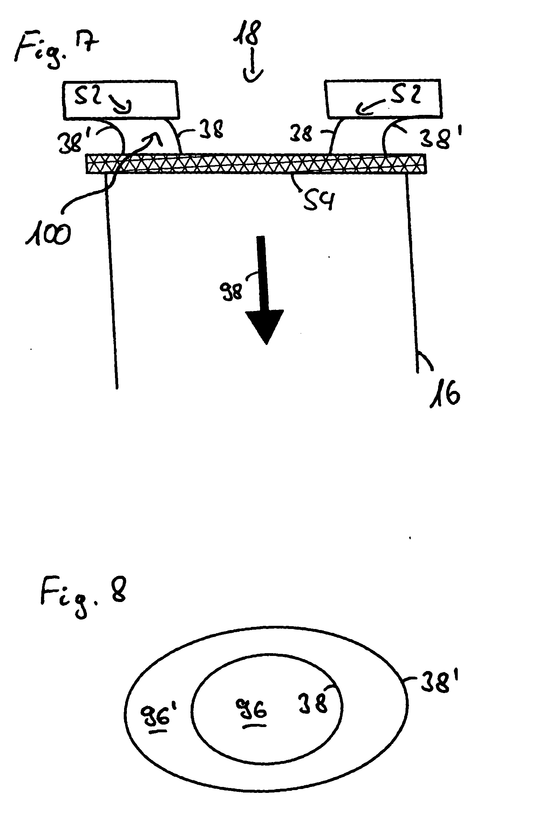

Figur 7 zeigt eine seitliche Schnittansicht eines als Flachsitzventil ausgeführten Doppelsitzventils. Dargestellt ist in einer seitlichen Schnittansicht schematisiert der Filtereinsatz 16 mit dem Siebfilter 54 der auf der der Eingangsöffnung 18 zugewandten Seite des Filtereinsatzes 16 angeordnet ist. Auf der Oberseite des Siebfilters 16 ist der Dichtring 38 angeordnet, der von dem als Ventilkörper wirkenden Filtereinsatz 16 gegen den Ventilsitz 52 gepresst wird. Der Dichtring 38 ist insbesondere als flexible Dichtlippe ausgeführt. Ein weiterer Dichtring 38' ist derart auf der Oberseite des Siebfilters 54 angeordnet, dass er die von dem Dichtring 38 umschlossene Fläche vollständig einschließt. Der weitere Dichtring 38' ist ebenfalls als eine flexible Dichtlippe ausgeführt und bildet zusammen mit dem Dichtring 38 und dem Ventilsitz 52 einen als Flachsitzventil ausgeführten Doppelventilsitz 100. Die Dichtlippe 38 ist kürzer als die weitere Dichtlippe 38', so dass nach Abheben des Filtereinsatzes 16 in einer Hubrichtung 98 zunächst nur der Dichtring 38 von dem Ventilsitz 52 abhebt, während der weitere Dichtring 38' weiterhin von dem Filtereinsatz 16 an den Ventilsitz 52 gepresst wird. Auf diese Weise kann durch die Eingangsöffnung 18 einströmende Druckluft durch die Bereiche des Siebfilters 54 strömen, die zwischen dem Dichtring 38 und dem weiteren Dichtring 38' liegen. Dies verändert die Wirkfläche des Sicherheitsventils und hält bei wachsendem Volumenstrom den an dem Siebfilter 54 abfallenden Staudruck konstant.

Figur 8 zeigt eine Draufsicht auf Wirkflächen eines Doppelsitzventils. Figur 8 ist eine schematisierte Draufsicht auf den in Figur 7 seitlich dargestellten Filtereinsatz. Sichtbar sind lediglich der Dichtring 38 und der weitere Dichtring 38' sowie eine von dem Dichtring 38 umschlossene Wirkfläche 96 und eine zwischen dem Dichtring 38 und dem weiteren Dichtring 38' angeordnete weitere Wirkfläche 96'.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Sicherheitsventil
- 12: Drucklufteingang
- 14: Druckluftausgang
- 16: Filtereinsatz
- 18: Eingangsöffnung
- 20: Schräge
- 22: Führungsnase
- 24: Sicherheitsventilgehäuse
- 26: elastisches Element
- 28: Richtung
- 30: Abdeckung
- 34: Nutzfahrzeug
- 36: Sensor
- 38: Dichtring
- 38': weiterer Dichtring
- 40: Führungsrippe
- 42: Strömungsweg
- 44: Dichtung
- 46: Gewinde
- 48: Bypassströmungsweg
- 50: Ablagerung
- 50': weitere Ablagerung
- 52: Ventilsitz
- 54: Siebfilter
- 56: Filtermaterial
- 58: Stützmanschette
- 60: Halteelement
- 62: Schmutzpartikel
- 62': kleinere Schmutzpartikel
- 64: Anströmrichtung
- 66: Schwerkraft
- 68: Auffangbehälter
- 70: Druckversorgung
- 72: Ventil
- 74: Behälter
- 76: Drucksensor
- 78: weiteres Ventil
- 80: Schaltaktuatoren
- 82: Kupplungsaktuator
- 84: Steuergerät
- 86: CAN-Bus
- 88: Zeitraum Δt₁
- 90: Zeitraum Δt₂
- 92: Betätigungskurve
- 94: pneumatische Getriebesteuerung
- 96: Wirkfläche
- 96': weitere Wirkfläche
- 98: Hubrichtung
- 100: Doppelventilsitz

## Patentansprüche

1. Sicherheitsventil (10) mit einem Drucklufteingang (12), einem Druckluftausgang (14) und einem im Inneren des Sicherheitsventils (10) angeordneten Filtereinsatz (16), wobei der Filtereinsatz (16) abhängig von einem anliegenden Staudruck in dem Sicherheitsventil (10) zwei axial verschiedene Endpositionen einnehmen kann und in einer der beiden Endpositionen einen Bypass freigibt, über den die Druckluft unter Umgehung des Filtereinsatzes (16) vom Drucklufteingang (12) zum Druckluftausgang (14) gelangt, **dadurch gekennzeichnet, dass** das Sicherheitsventil (10) einen Doppelventilsitz (100) umfasst, durch den die Wirkfläche des Sicherheitsventils (10) bei zunehmendem Volumenstrom vergrößert wird, um den Staudruck konstant zu halten.

2. Sicherheitsventil (10) nach Anspruch 1, **dadurch gekennzeichnet, dass** der Filtereinsatz (16) an seiner Eingangsöffnung (18) eine Schräge (20) aufweist.

3. Sicherheitsventil (10) nach Anspruch 1 oder 2, **dadurch gekennzeichnet, dass** der mit zunehmendem öffnungshub des Sicherheitsventils (10) freigegebene Strömungsquerschnitt am Ventilsitz (52) zunimmt, wodurch der Staudruck bei zunehmendem Volumenstrom konstant gehalten wird.

4. Sicherheitsventil (10) nach einem der vorhergehenden Ansprüche, **dadurch gekennzeichnet, dass** an dem Filtereinsatz (16) eine Führungsnase (22) angeordnet ist.

5. Sicherheitsventil (10) nach einem der vorhergehenden Ansprüche, **dadurch gekennzeichnet, dass** an einem Sicherheitsventitgehäuse (24) eine Führungsnase (22) angeordnet ist.

6. Sichefieitsventil (10) nach einem der vorhergehenden Ansprüche, **dadurch gekennzeichnet, dass** ein elastisches Element (26) vorgesehen ist, über das der Filtereinsatz (16) in einem Sichefieitsventilgehäuse (24) in einer Richtung (28) entgegen einer definierten von dem elastischen Element (26) aufgebrachten Kraft beweglich fixiert ist.

7. Sicherheitsventil (10) nach Anspruch 6, **dadurch gekennzeichnet, dass** der Filtereinsatz (16) hinter einer verschließbaren Abdeckung (30) in einem Sicherheitsventilgehäuse (24) montierbar ist.

8. Sichefieitsventil (10) nach Anspruch 7, **dadurch gekennzeichnet, dass** die von dem elastischen Element (26) aufgebrachte Kraft, die den Filtereinsatz (16) fixiert, über die Abdeckung (30) einstellbar ist.

9. Sichefieitsventil (10) nach einem der vorhergehenden Ansprüche, **dadurch gekennzeichnet, dass** die Druckluft den Filtereinsatz (16) radial von Innen nach Au-βen durchströmt.

10. Pneumatische Getriebesteuerung (94) für ein Nutzfahrzeug (34), mit einem Sichefieitsventil (10) nach einem der vorhergehenden Ansprüche, zur Aufbereitung der verwendeten Druckluft.

11. Pneumatische Getriebesteuerung (94) nach Anspruch 10, **dadurch gekennzeichnet, dass** ein Sensor (36) zur Bestimmung des Betriebszustands des Sicherheitsventils (10) vorgesehen ist.

## Claims

1. Safety valve (10) comprising a compressed air inlet (12), a compressed air outlet (14) and a filter element (16) placed in the interior of the safety valve (10), wherein the filter element (16) can, as a function of an applied back pressure in the safety valve (10), adopt two axially different end positions and in one of the two end positions opens a bypass via which the compressed air, while bypassing the filter element (16), flows from the compressed air inlet (12) to the compressed air outlet (14), **characterised in that** the safety valve (10) has a double valve seat (100), whereby the active area of the safety valve (10) is increased with increasing volumetric flow rate in order to keep the back pressure constant.

2. Safety valve (10) according to claim 1, **characterised in that** the filter element (16) has a bevel (20) at its inlet opening (18).

3. Safety valve (10) according to claim 1 or 2, **characterised in that** the flow cross-section opened up as the opening stroke of the safety valve (10) increases is increased at the valve seat (52), whereby the back pressure is held constant as the volumetric flow rate increases.

4. Safety valve (10) according to any of the preceding claims, **characterised in that** a guide lug (22) is provided on the filter element (16).

5. Safety valve (10) according to any of the preceding claims, **characterised in that** a guide lug (22) is provided on a safety valve housing (24).

6. Safety valve (10) according to any of the preceding claims, **characterised in that** an elastic element (26) is provided, by way of which the filter element (16) is located in a safety valve housing (24) while being movable in a direction (28) against a defined force applied by the elastic element (26).

7. Safety valve (10) according to claim 6, **characterised in that** the filter element (16) can be installed in a safety valve housing (24) behind a closable cover (30).

8. Safety valve (10) according to claim 7, **characterised in that** the force applied by the elastic element (26) for the location of the filter element (16) is adjustable by means of the cover (30).

9. Safety valve (10) according to any of the preceding claims, **characterised in that** the compressed air flows radially through the filter element (16) from the inside towards the outside.

10. Pneumatic gearbox control (94) for a commercial vehicle (34), comprising a safety valve (10) according to any of the preceding claims for preparing the compressed air used.

11. Pneumatic gearbox control (94) according to claim 10, **characterised in that** a sensor (36) is provided for the determination of the operating state of the safety valve (10).

## Revendications

1. Soupape (10) de sécurité ayant une entrée (12) d'air comprimé, une sortie (14) d'air comprimé et un insert (16) filtrant disposé à l'intérieur de la soupape (10) de sécurité, l'insert (16) filtrant pouvant, en fonction d'une pression dynamique s'appliquant, prendre dans la soupape (10) de sécurité deux positions d'extrémité différentes axialement et dégageant dans l'une des deux positions d'extrémité une dérivation par laquelle l'air comprimé parvient, en contournant l'insert (16) filtrant, de l'entrée (12) d'air comprimé à la sortie (14) d'air comprimé, **caractérisée en ce que** la soupape (10) de sécurité comprend un siège (100) de soupape double, par lequel la surface active de la soupape (10) de sécurité est agrandie lorsque le courant en volume augmente pour maintenir constante la pression dynamique.

2. Soupape (10) de sécurité suivant la revendication 1, **caractérisée en ce que** l'insert (16) filtrant a un biseau (20) à son ouverture (18) d'entrée.

3. Soupape (10) de sécurité suivant la revendication 1 ou 2, **caractérisée en ce que** la section transversale d'écoulement dégagée au fur et à mesure qu'augmente la course d'ouverture de la soupape (10) de sécurité augmente au siège (52) de la soupape, de sorte que la pression dynamique est maintenue constante lorsque le courant en volume augmente.

4. Soupape (10) de sécurité suivant l'une des revendications précédentes, **caractérisée en ce qu'**un bec (22) de guidage est disposé sur l'insert (16) filtrant.

5. Soupape (10) de sécurité suivant l'une des revendications précédentes, **caractérisée en ce qu'**un bec (22) de guidage est monté sur un corps (24) de la soupape de sécurité.

6. Soupape (10) de sécurité suivant l'une des revendications précédentes, **caractérisée en ce qu'**il est prévu un élément (26) élastique, par lequel l'insert (16) filtrant est immobilisé en étant mobile dans un corps (24) de la soupape de sécurité dans une direction opposée à une force définie appliquée par l'élément (26) élastique.

7. Soupape (10) de sécurité suivant la revendication 6, **caractérisée en ce que** l'insert (16) filtrant peut être monté derrière un recouvrement (30) pouvant être fermé dans le corps (24) de la soupape de sécurité.

8. Soupape (10) de sécurité suivant la revendication 7, **caractérisée en ce que** la force appliquée par l'élément (26) élastique, qui immobilise l'insert (16) filtrant, est réglable par le recouvrement (30).

9. Soupape (10) de sécurité suivant l'une des revendications précédentes, **caractérisée en ce que** l'air comprimé traverse l'insert (16) filtrant radialement de l'intérieur vers l'extérieur.

10. Commande (94) de transmission pneumatique pour un véhicule (34) utilitaire ayant une soupape (10) de sécurité suivant l'une des revendications précédentes pour la préparation de l'air comprimé utilisé.

11. Commande (94) de transmission pneumatique suivant la revendication 10, **caractérisée en ce qu'**il est prévu un capteur (36) de détermination de l'état de fonctionnement de la soupape (10) de sécurité.
